# EUROPÄISCHE PATENTSCHRIFT

(11) **EP 2 126 524 B1**
(45) Veröffentlichungstag und Bekanntmachung des Hinweises auf die Patenterteilung: **20.06.2018**
(21) Anmeldenummer: 08716780.5
(22) Anmeldetag: 08.02.2008
(51) Int. Cl.: G01G 19/414, G01D 5/14, G01L 1/14, B41F 21/00, B41F 33/00, G01L 1/12

(54) **KRAFTMESSVORRICHTUNG UND VERFAHREN ZUR SIGNALAUSWERTUNG**
FORCE MEASURING DEVICE AND METHOD FOR SIGNAL EVALUATION
DISPOSITIF DE MESURE DE FORCE ET PROCÉDÉ D'ÉVALUATION DE SIGNAUX

(30) Priorität: 20.02.2007 DE 102007009389
(43) Veröffentlichungstag der Anmeldung: 02.12.2009
(73) Patentinhaber: BAG Bizerba Automotive GmbH, 72336 Balingen (DE)
(72) Erfinder: SAUTTER, Sven, 72770 Reutlingen (DE); HAMPE, Andreas, 73230 Kirchheim (DE)
(74) Vertreter: Hoeger, Stellrecht & Partner Patentanwälte mbB
(86) Internationale Anmeldenummer: PCT/EP2008/051563
(87) Internationale Veröffentlichungsnummer: WO 2008/101820

(56) Entgegenhaltungen:
- WO-A-93/18380
- WO-A-2005/088267
- WO-A-2006/105902
- JP-A- S60 177 232
- JP-A- S60 195 432
- US-A1- 2004 239 514
- US-A1- 2006 208 726

## Beschreibung

Die Erfindung betrifft eine Kraftmessvorrichtung, umfassend umfassend eine magnetfelderzeugende Gebereinrichtung mit einer Mehrzahl von Magneten, und eine magnetfeldsensitive Sensoreinrichtung, welche in einem Raum vor der Gebereinrichtung angeordnet ist, wobei die Gebereinrichtung und die Sensoreinrichtung unter Krafteinfluss relativ zueinander beweglich sind, wobei die Magnete der Gebereinrichtung in einer Quadrupolanordnung bezüglich der Sensoreinrichtung positioniert sind, wobei die Gebereinrichtung eine erste Mittelebene aufweist, zu welcher die Magnete geometrisch symmetrisch angeordnet sind, und die Gebereinrichtung eine zweite Mittelebene aufweist, welche quer zur ersten Mittelebene ist, zu welcher die Magnete geometrisch symmetrisch angeordnet sind, und wobei die Sensoreinrichtung mindestens ein erstes Sensorelement und ein zweites Sensorelement aufweist, wobei das erste Sensorelement einem ersten Magnetpol oder einem ersten Magnetpolpaar zugeordnet ist und das zweite Sensorelement einem zweiten Magnetpol oder zweiten Magnetpolpaar zugeordnet ist.

Die Erfindung betrifft ferner ein Verfahren zur Signalauswertung bei einer Kraftmessvorrichtung.

Aus der WO 2006/105902 A1 ist eine Kraftmessvorrichtung bekannt, welche eine Geber-Sensor-Anordnung mit einer magnetfelderzeugenden Gebereinrichtung und einer magnetfeldempfindlichen Sensoreinrichtung umfasst. Die Gebereinrichtung und die Sensoreinrichtung sind unter Kraftbeeinflussung der Kraftmessvorrichtung relativ zueinander beweglich. Die Gebereinrichtung weist mindestens einen ersten Permanentmagneten und einen zweiten Permanentmagneten auf, welche jeweils über eine Längsrichtung einen im Wesentlichen konstanten geometrischen Querschnitt aufweisen. Der erste Permanentmagnet und der zweite Permanentmagnet sind in einem Winkel zueinander angeordnet.

Aus der DE 10 2004 011 591 A1 ist ein Verbindungselement bekannt, welches derart konfiguriert ist, dass das Verbindungselement eine Relativbewegung zwischen einem Magnetsystem und einer Magnetsensorik zur Kraftmessung erfasst. Das Magnetsystem ist zur Magnetsensorik derart angeordnet, dass eine Komponente des Magnetfelds senkrecht zur Relativbewegung linearisiert wird.

Aus der DE 103 44 043 A1 ist eine magnetische Lenkwinkel-Erfassungsvorrichtung bekannt.

Aus der DE 100 60 287 A1 ist eine Vorrichtung zur Messung des Winkels und/oder der Winkelgeschwindigkeit eines drehbaren Körpers bekannt, bei der jeweils dem drehbaren Körper und einem ortsfesten Teil der Vorrichtung eine felderzeugende und/oder verändernde bzw. eine auf das erzeugte und/oder veränderte Feld ansprechende Anordnung zugeordnet ist und zusätzlich noch eine Messung des auf den drehbaren Körpers wirkenden Drehmoments erfolgt.

Aus der EP 1 076 225 A2 ist ein magnetischer Verrückungssensor bekannt.

Magnetische Positionsdetektoren sind auch aus der US 4,936,148, US 5,493,216, US 6,515,474 B1 und US 2004/0239514 A1 bekannt.

Die US 2006/0208726 A1 offenbart ein Positionssensorsystem mit einer Mehrzahl von Magneten und einer Mehrzahl von Magnetsensoren.

Die US 2004/0239514 A1 offenbart eine Sitzstruktur mit einer Torsionsbar.

Die JP 60195432 offenbart einen Kraftdetektor mit Permanentmagneten und Hall-Elementen.

Die JP 60177232 offenbart ebenfalls einen Kraftdetektor mit Permanentmagneten und Hall-Elementen.

Der Erfindung liegt die Aufgabe zugrunde, eine Kraftmessvorrichtung der eingangs genannten Art bereitzustellen, welche auf universelle Weise einsetzbar ist.

Diese Aufgabe wird bei der eingangs genannten Kraftmessvorrichtung erfindungsgemäß dadurch gelöst, dass einem zentralen Bereich der Quadrupolanordnung ein eigenes Sensorelement zugeordnet ist, wobei der zentrale Bereiche im Bereich der Schnittlinie der ersten Mittelebene und der zweiten Mittelebene liegt und der zentrale Bereich mindestens näherungsweise magnetfeldfrei ist.

Bei der erfindungsgemäßen Lösung sind die Magnete in einer Quadrupolanordnung angeordnet. Bei der Quadrupolanordnung weisen je zwei Magnet pole ein gleiches Vorzeichen (Nord, Süd) auf. Dadurch erhält man eine Richtungsselektivität zumindest in einer Ebene. Gegebenenfalls lässt sich auch eine Richtungsselektivität senkrecht zu dieser Ebene erreichen.

Die Sensoreinrichtung umfasst mehrere (mindestens zwei) Sensorelemente. Dadurch lässt sich über die Richtungsselektivität der Quadrupolanordnung eine Richtungsabhängigkeit der Kraft ermitteln, welche wirkt. Alternativ oder zusätzlich ist es möglich, durch die Differenzbildung von Sensorsignalen Störeinflüsse, wie magnetische Störfelder (insbesondere externe magnetische Störfelder), rechnerisch zu eliminieren.

Durch die erfindungsgemäße Lösung ist es möglich, beispielsweise die x-Komponente und y-Komponente einer Kraft zu bestimmen (wenn die Gebereinrichtung und die Sensoreinrichtung in einer z-Richtung aufeinander folgen). Es ist dadurch eine Winkelauflösung einer einwirkenden Kraft möglich.

Es ist damit auch möglich, da der Krafteinleitungswinkel prinzipiell beliebig wählbar ist, die Kraftmessvorrichtung (beispielsweise in Form einer Kraftmesszelle) in einer beliebigen Einbauorientierung an einer Anwendung, wie beispielsweise einem Fahrzeugsitz, zu montieren.

Es ist ferner beispielsweise möglich, Torsionen von Sensoreinrichtung und Gebereinrichtung relativ zueinander zu ermitteln.

Weiterhin ist es möglich, über eine nichtlineare Hauptpolnäherung eine z-Komponente des Magnetfelds auszuwerten.

Durch eine differentielle Wegmessungsauswertung bzw. Kraftmessungsauswertung über zwei gegensätzliche magnetische Nebenfelder (hervorgerufen durch die Quadrupolanordnung) lassen sich Störfelder kompensieren. Dadurch lässt sich eine hohe Messgenauigkeit erreichen.

Es kann vorgesehen sein, dass die Anzahl der Sensorelemente geringer ist als die Anzahl der Magnetpole (welche vier ist). Beispielsweise kann die entsprechende Sensoreinrichtung zwei Sensorelemente umfassen, wobei diese Sensorelemente jeweils einem Magnetpolpaar zugeordnet sind. Gegebenenfalls kann ein drittes Sensorelement vorgesehen sein, welches einem zentralen Bereich der Quadrupolanordnung zugeordnet ist. Es ist auch möglich, dass jedem Magnetpol ein oder zwei Sensorelemente zugeordnet sind. Dadurch ergeben sich eine Vielzahl von Auswertungsmöglichkeiten, so dass die entsprechende Kraftmessvorrichtung universell einsetzbar ist bzw. eine hohe Genauigkeit aufweist. Eine Zuordnung von zwei Sensorelementen zu einem Magnetpol ist realisierbar, wenn das entsprechende Sensorelement teilweise in einem Projektionsraum liegt, welcher dem einen Magnetpol zugeordnet ist, und teilweise in dem Projektionsraum liegt, welcher dem anderen Magnetpol zugeordnet ist.

Es ist beispielsweise auch möglich, dass jedem Magnetpolpaar ein Sensorelement zugeordnet ist. In einer Quadrupolanordnung gibt es vier Magnetpolpaare (Nordpol-Südpol-Paare). Entsprechend weist dann die Sensoreinrichtung mindestens vier Sensorelemente auf. Bei entsprechender Orientierung der Sensorelemente lässt sich eine einfache Montageoptimierung erreichen, wenn gegenüberliegende Sensorelemente bezüglich einer Nullfeld-Linie ausgerichtet werden.

Insbesondere weisen in der Quadrupolanordnung je zwei Magnetpole mit gleichem Vorzeichen der Sensoreinrichtung zu. Dadurch sind zwei gegensätzliche magnetische Nebenfelder bereitgestellt. Wenn die Gebereinrichtung und die Sensoreinrichtung in einer z-Richtung aufeinander folgen, dann sind zwei gegensätzliche magnetische Nebenfelder sowohl in der x-Richtung senkrecht zur z-Richtung als auch in der y-Richtung senkrecht zur z-Richtung und zur x-Richtung bereitgestellt.

In der Quadrupolanordnung weisen nächstbenachbarte Magnetpole unterschiedliche Vorzeichen auf (das heißt die nächstbenachbarten Magnetpole sind jeweils ein Nordpol und ein Südpol). Dadurch lassen sich gegensätzliche magnetische Nebenfelder bereitstellen.

Aus dem gleichen Grund ist es günstig, wenn in der Quadrupolanordnung diagonal gegenüberliegende Magnetpole das gleiche Vorzeichen aufweisen.

Günstigerweise ist die Gebereinrichtung mittels Permanentmagneten gebildet. Dadurch lässt sich die Kraftmessvorrichtung kompakt mit kleiner Bauweise ausbilden.

Es kann vorgesehen sein, dass die Gebereinrichtung zwei Magnete oder vier Magnete zur Bereitstellung der Quadrupolanordnung aufweist. Je nach Anwendung lassen sich dadurch optimierte Magnetfeldbedingungen bei kompakter Bauweise bereitstellen.

Ganz besonders vorteilhaft ist es, wenn die Magnete der Gebereinrichtung im Wesentlichen gleich ausgebildet sind. Dadurch lassen sich auf einfache Weise symmetrische Verhältnisse erreichen. Dies erlaubt eine einfache Kompensation von Störfeldern durch differentielle Wegmessung bzw. Kraftmessung. Ferner ist eine nichtlineare Hauptpolnäherung auf einfache Weise durchführbar, um eine z-Komponente eines Magnetfelds zu erfassen.

Bei einem Ausführungsbeispiel umfasst die Gebereinrichtung Stabmagnete, deren Magnetpole entlang der längsten Erstreckungsachse liegen. Eine Stirnseite eines solchen Stabmagnets, welche der Sensoreinrichtung zugewandt ist, ist dann eine Polseite (des Nordpols oder des Südpols des Stabmagnets). Bei einer solchen Ausbildung werden vier Stabmagnete für eine Quadrupolanordnung benötigt.

Bei einer alternativen Ausführungsform umfasst die Gebereinrichtung Magnete, deren Magnetpole entlang einer Erstreckungsachse liegen, welche quer zur längsten Erstreckungsachse ist. In diesem Falle weist eine Stirnseite des entsprechenden Magnets, welche der Sensoreinrichtung zuweist, sowohl einen Nordpolteil als auch einen Südpolteil auf. Bei dieser Ausführungsform genügen grundsätzlich zwei Magnete zur Ausbildung einer Quadrupolanordnung.

Ganz besonders vorteilhaft ist es, wenn die Gebereinrichtung eine erste Mittelebene aufweist, zu welcher die Magnete geometrisch symmetrisch angeordnet sind. Dadurch lässt sich ein hoher Symmetriegrad für die Quadrupolanordnung bereitstellen. Dadurch lassen sich durch eine differentielle Auswertung Störfelder auf einfache Weise rechnerisch eliminieren. Weiterhin lässt sich durch eine nichtlineare Hauptpolnäherung eine z-Komponente des Magnetfelds auf einfache Weise bestimmen.

Die geometrische Anordnung bezieht sich auf die äußere Form der Magnete ohne Berücksichtigung der Polung.

Es ist dann günstig, wenn die Magnetpolvorzeichen zu der ersten Mittelebene antisymmetrisch sind, um eine Quadrupolanordnung bereitzustellen.

Aus dem gleichen Grund ist es günstig, wenn die Gebereinrichtung eine zweite Mittelebene aufweist, welche quer (und insbesondere senkrecht) zur ersten Mittelebene ist, zu welcher die Magnete geometrisch symmetrisch angeordnet sind. Dadurch lässt sich ein hoher Symmetriegrad bereitstellen.

Für die Bereitstellung einer Quadrupolanordnung sind die Magnetpolvorzeichen zur zweiten Mittelebene antisymmetrisch.

Bei einem Ausführungsbeispiel ist es vorgesehen, dass ein oder mehrere Magnete in einem spitzen Winkel bezogen auf die erste Mittelebene und/oder zweite Mittelebene angeordnet sind. Dadurch lässt sich, wie in der WO 2006/105902 A1 beschrieben, eine hohe Magnetfeldfokussierung an der Sensoreinrichtung erreichen. Dies führt zu einer Kennwertverbesserung der entsprechenden Geber-Sensor-Anordnung. Die magnetische Energiedichte wird erhöht, so dass eine höhere Unempfindlichkeit gegenüber magnetischen Störfeldern vorliegt.

Insbesondere liegt ein Schnittpunkt von Erstreckungsachsen von Magneten, welche in einem spitzen Winkel angeordnet sind, in dem Raum vor der Gebereinrichtung. Die Magnete sind dann V-förmig angeordnet, wobei sich das V von der Sensoreinrichtung weg aufweitet.

Die Magnete sind in der Quadrupolanordnung so angeordnet und ausgebildet, dass ein mindestens näherungsweise magnetfeldfreier zentraler Bereich vorliegt. Über diesen zentralen magnetfeldfreien Bereich lässt sich der Einfluss von Störfeldern bestimmen, wenn diesem entsprechend ein Sensorelement zugeordnet ist. Die Störfelder können dann rechnerisch bei der Auswertung der Sensorsignale berücksichtigt werden.

Insbesondere liegt der magnetfeldfreie zentrale Bereich am Kreuzungspunkt einer ersten Mittelebene und einer zweiten Mittelebene der Gebereinrichtung.

Einem zentralen Bereich der Quadrupolanordnung ist ein eigenes Sensorelement zugeordnet. Es lässt sich dann die magnetische Feldstärke an diesem zentralen Bereich bestimmen. Dadurch lässt sich beispielsweise die Größe von externen Störfeldern messen und diese Störfelder können dann bei der Auswertung berücksichtigt werden.

Ganz besonders vorteilhaft ist es, wenn jedem Magnetpol mindestens ein Sensorelement zugeordnet ist. Dadurch lässt sich eine x-Komponente und eine y-Komponente der eingeleiteten Kraft bestimmen, das heißt es lässt sich bezogen auf eine definierte Achse ein Krafteinleitungswinkel bestimmen. Ferner ist eine Differentialauswertung bezüglich beiden Komponenten möglich. Weiterhin ist es beispielsweise auch möglich, eine Torsion zu bestimmen, indem die Signale aller Sensorelemente berücksichtigt werden. Weiterhin ist es auch möglich, eine nichtlineare Hauptpolnäherung durchzuführen, um beispielsweise eine Magnetfeldstärke in z-Richtung zu bestimmen.

Es ist dann günstig, wenn die Sensoreinrichtung (mindestens) ein drittes Sensorelement und ein viertes Sensorelement umfasst. Es kann noch ein fünftes Sensorelement vorgesehen sein, welches einem zentralen Bereich der Quadrupolanordnung zugeordnet ist.

Günstig ist es, wenn die Sensorelemente der Sensoreinrichtung symmetrisch zu einer ersten Mittelebene angeordnet sind. Dadurch sind die Sensorelemente relativ zueinander gleich angeordnet, so dass eine Differentialauswertung auf einfache Weise möglich ist.

Aus dem gleichen Grund ist es günstig, wenn die Sensorelemente der Sensoreinrichtung symmetrisch zu einer zweiten Mittelebene angeordnet sind, welche quer und insbesondere senkrecht zur ersten Mittelebene ist.

Es lassen sich Bedingungen mit hohem Symmetriegrad erreichen, wenn die erste Mittelebene der Sensoreinrichtung mit einer ersten Mittelebene der Gebereinrichtung zusammenfällt, wenn keine relative Auslenkung zwischen der Gebereinrichtung und Sensoreinrichtung vorliegt. Dadurch lässt sich beispielsweise auf einfache Weise eine x-Komponente und eine y-Komponente einer wirkenden Kraft bestimmen, welche eine Auslenkung der Sensoreinrichtung und der Gebereinrichtung relativ zueinander bewirkt.

Es ist auch möglich, dass die erste Mittelebene der Sensoreinrichtung in einem Winkel zu einer ersten Mittelebene der Gebereinrichtung liegt. Beispielsweise liegt dieser Winkel bei 45°. Dadurch ist die Montage der Sensoreinrichtung und der Gebereinrichtung vereinfachbar; die Ausrichtung von einander zugeordneten Sensorelementen lässt sich bezüglich einer Nullfeld-Linie optimieren.

Aus dem oben genannten Grund ist es günstig, wenn die zweite Mittelebene der Sensoreinrichtung mit einer zweiten Mittelebene der Gebereinrichtung zusammenfällt, wenn keine relative Auslenkung zwischen Gebereinrichtung und Sensoreinrichtung vorliegt.

Es kann auch vorgesehen sein, dass die zweite Mittelebene der Sensoreinrichtung in einem Winkel (wie beispielsweise 45°) zu einer zweiten Mittelebene der Gebereinrichtung liegt. Dadurch lassen sich einander zugeordnete Sensorelemente auf einfache Weise gegenüber einer Nullfeld-Linie ausrichten. Dadurch wiederum lässt sich die Montage der Sensoreinrichtung und der Gebereinrichtung zueinander vereinfachen.

Insbesondere sind Sensorelemente der Sensoreinrichtung an den Ecken eines Vierecks angeordnet. Dieses Viereck ist vorzugsweise eben und insbesondere ein Rechteck. Ein hoher Symmetriegrad lässt sich erreichen, wenn das Viereck ein Quadrat ist.

Es ist möglich, dass das Viereck der Sensoreinrichtung kongruent zu einem Viereck ist, auf dessen Ecken die Magnetpole liegen, oder in einem Winkel zu dem Viereck der Magnetpole ist. Kongruent bedeutet, dass die Seiten des Vierecks der Sensoreinrichtung im Wesentlichen parallel zu den Seiten des Vierecks der Magnetpole liegen. Der Winkel, in welchem das Viereck der Sensoreinrichtung relativ zum Viereck der Magnetpole angeordnet ist, beträgt beispielsweise 45°. Im letzteren Fall lässt sich bei der Montage der Kraftmessvorrichtung eine einfache Ausrichtbarkeit bezüglich einer Nullfeld-Linie erreichen.

Es kann ein weiteres Sensorelement an einem Diagonalenschnittpunkt des Vierecks angeordnet sein. Über ein solches Sensorelement lassen sich Störfelder messen. Die Störfeldresultate können dann bei der Auswertung berücksichtigt werden.

Günstigerweise ist ein einem oder mehreren Magnetpolen zugeordnetes Sensorelement in einem Projektionsraum des oder der Magnetpole vor dem oder den Magnetpolen in Richtung der Sensoreinrichtung positioniert. Es lässt sich dann bei jeder erlaubten relativen Auslenkung zwischen Sensoreinrichtung und Gebereinrichtung ein Sensorelementsignal bereitstellen, welches entsprechend mit anderen Sensorelementsignalen verknüpfbar ist, um beispielsweise eine differentielle Auswertung durchführen zu können.

Bei einer fertigungstechnisch einfachen Ausführungsform sind die Sensorelemente Hall-Elemente. Die entsprechende Kraftmessvorrichtung lässt sich kompakt ausbilden. Es lassen sich dadurch beispielsweise Auslenkungen im Mikrometerbereich messen.

Günstig ist es, wenn eine Auswertungseinrichtung vorgesehen ist, durch welche die Signale unterschiedlicher Sensorelemente verknüpfbar sind. Dadurch ist beispielsweise eine differentielle Auswertung durchführbar und/oder es ist eine Summenbildung durchführbar. Es lassen sich verschiedene Signalauswertungen durchführen, um beispielsweise die x-Komponente und die y-Komponente einer Kraft zu bestimmen, um Störfelder rechnerisch zu eliminieren, um Torsionen zu bestimmen und um eine nichtlineare Hauptpolnäherung durchzuführen.

Es ist dann günstig, wenn die Auswertungseinrichtung eine Differenzbildungseinheit umfasst, durch welche eine Differenzbildung an Signalen unterschiedlicher Sensorelemente durchführbar ist. Dadurch ist eine differentielle Kraftmessung bzw. Wegmessung durchführbar. Dies ermöglicht es, Signale hoher Genauigkeit unter Elimination von Störeinflüssen bereitzustellen. Ferner ist eine Bestimmung eines Krafteinleitungswinkels möglich.

Es kann auch vorgesehen sein, dass die Auswertungseinrichtung eine Summierungseinheit zur Summenbildung von Signalen unterschiedlicher Sensorelemente umfasst. Über die Summierung von Sensorsignalen von diagonal gegenüberliegenden Sensorelemente lässt sich gegebenenfalls unter Berücksichtigung des Einflusses von Störfeldern eine nichtlineare Hauptpolnäherung durchführen. Mit dieser lässt sich die z-Komponente des wirkenden Magnetfelds ermitteln.

Bei einer Ausführungsform ist die Gebereinrichtung oder die Sensoreinrichtung mit einem elastischen Kraftaufnehmer verbunden. Über den elastischen Kraftaufnehmer werden direkt oder über eine Krafteinleitungseinrichtung Kräfte eingeleitet, welche zu einer elastischen Verformung führen. Die elastische Verformung führt zu einer Relativbewegung zwischen der Gebereinrichtung und der Sensoreinrichtung; die Gebereinrichtung und die Sensoreinrichtung werden bezogen auf eine Null-Lage relativ zueinander ausgelenkt. Diese Auslenkung führt zu einer Veränderung der Magnetfeldbeaufschlagung der Sensoreinrichtung. Aus dieser Änderung wiederum lässt sich die Auslenkung und daraus die Kraft ermitteln.

Bei einer Ausführungsform ist der Kraftaufnehmer als Hohlstab ausgebildet.

Es ist dann günstig, wenn die Gebereinrichtung und die Sensoreinrichtung in einem Innenraum des Hohlstabs angeordnet sind. Durch die erfindungsgemäße Lösung lässt sich die Kraft über einen gesamten Umfangsbereich einleiten, wobei der Krafteinleitungswinkel relativ zu einer vorgegebenen radialen Achse ermittelbar ist.

Der Erfindung liegt ferner die Aufgabe zugrunde, ein Verfahren zur Signalauswertung bei einer Kraftmessvorrichtung bereitzustellen.

Diese Aufgabe wird bei der erfindungsgemäßen Kraftmessvorrichtung erfindungsgemäß dadurch gelöst, dass ein Magnetfeld in einem zentralen Bereich der Quadrupolanordnung durch ein Sensorelement gemessen wird, welches dem zentralen Bereich zugeordnet ist.

Bei einem Verfahren lassen sich Signale bereitstellen, bei welchen Störeinflüsse durch die Differenzbildung eliminiert sind. Ferner lässt sich durch die Differenzbildung eine Richtungsauswertung der eingeleiteten Kraft durchführen.

Durch die Messung des Magnetfelds in einem zentralen Bereich der Quadrupolanordnung lassen sich insbesondere externe Störfelder messen und bei der Auswertung der Sensorsignale berücksichtigen.

Durch die Auswertung von Signalen von diagonal gegenüberliegenden Sensorelementen ist es möglich, einen Magnetfeldanteil in einer z-Richtung (in welcher die Gebereinrichtung und die Sensoreinrichtung aufeinander folgen) durch nichtlineare Hauptpolnäherung zu bestimmen.

Es kann vorgesehen sein, dass eine Differenzbildung mit den Signalen jeweils eines ersten Paars von Sensorelementen und eines zweiten Paars von Sensorelementen durchgeführt, wobei eine Verbindungsrichtung zwischen den Sensorelementen des ersten Paars quer (und insbesondere senkrecht) zu der Verbindungsrichtung zwischen den Sensorelementen des zweiten Paars liegt. Dadurch ist eine Unterscheidung zwischen einer ersten Kraftkomponente und einer linear unabhängigen zweiten Kraftkomponente der wirkenden Kraft möglich. Dadurch ist ein Krafteinleitungswinkel bestimmbar bzw. es ist erreichbar, dass es auf die Einbauorientierung der Kraftmessvorrichtung nicht ankommt.

Beispielsweise werden die Signale von vier Sensorelementen ausgewertet, welche auf den Ecken eines Vielecks positioniert sind. Das Vieleck ist insbesondere eben. Es weist eine Normalenrichtung auf, welche parallel mit der Aufeinanderfolgerichtung der Gebereinrichtung und der Sensoreinrichtung ist. Es lassen sich dadurch Torsionen bestimmen (bezogen auf eine Drehachse, welche parallel zu der Normalenachse des Vielecks ist).

Es kann auch vorgesehen sein, dass eine Hauptpolnäherung durchgeführt wird. Dazu werden insbesondere die Signale von diagonal gegenüberliegenden Sensorelementen ausgewertet.

Beispielsweise erfolgt die Auswertung der Signale von diagonal gegenüberliegenden Sensorelementen durch eine Summenbildung. Dadurch lässt sich zumindest näherungsweise ein z-Anteil des Magnetfelds bestimmen.

Günstig ist es, wenn ein Störfeld in einem zentralen Bereich der Quadrupolanordnung gemessen und bei der Auswertung berücksichtigt wird. Durch eine Differenzbildung von Signalen von unterschiedlichen Sensorelementen lassen sich gleiche Störeinflüsse eliminieren. Durch die Messung des zentralen Störfelds kann dieses auch explizit berücksichtigt werden, beispielsweise bei einer nichtlinearen Hauptpolnäherung.

Die nachfolgende Beschreibung bevorzugter Ausführungsformen dient im Zusammenhang mit der Zeichnung der näheren Erläuterung der Erfindung. Es zeigen:
- Figur 1: eine Schnittansicht eines Ausführungsbeispiels einer erfindungsgemäßen Kraftmessvorrichtung;
- Figur 2: eine schematische Darstellung eines Ausführungsbeispiels einer Magnetanordnung an einer Gebereinrichtung;
- Figur 3: eine schematische Darstellung einer Draufsicht auf eine Sensoreinrichtung und Gebereinrichtung;
- Figur 4: eine schematische seitliche Ansicht der Gebereinrichtung und Sensoreinrichtung gemäß Figur 3 in Richtung A;
- Figur 5: eine Darstellung des Magnetfeldverlaufs für die Gebereinrichtung gemäß Figur 3;
- Figur 6: ein zweites Ausführungsbeispiel einer Magnetanordnung;
- Figur 7: ein drittes Ausführungsbeispiel einer Magnetanordnung;
- Figur 8: ein viertes Ausführungsbeispiel einer Magnetanordnung;
- Figur 9: ein fünftes Ausführungsbeispiel einer Magnetanordnung;
- Figur 10: eine Variante eines Ausführungsbeispiels einer Kraftmessvorrichtung in Teildarstellung mit einer Gebereinrichtung entsprechend dem Ausführungsbeispiel gemäß Figur 2 und einer modifizierten Sensoreinrichtung;
- Figur 11: eine schematische Darstellung der relativen Position von Gebereinrichtung und Sensoreinrichtung bei einer Drehung (Torsion);
- Figur 12: eine schematische Darstellung der relativen Position zwischen der Gebereinrichtung und der Sensoreinrichtung bei linearer z-Bewegung relativ zueinander; und
- Figur 13: die relative Position zwischen Gebereinrichtung und Sensoreinrichtung bei Drehung der Sensoreinrichtung um eine Achse parallel zur y-Achse.

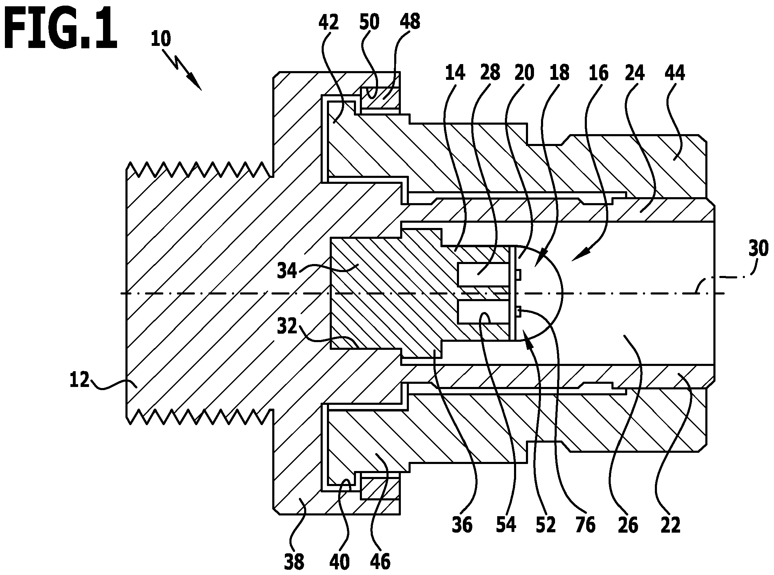

Ein Ausführungsbeispiel einer erfindungsgemäßen Kraftmessvorrichtung, welches in Figur 1 in Schnittansicht gezeigt und dort mit 10 bezeichnet ist, ist insbesondere als Kraftmesszelle ausgebildet. Die Kraftmessvorrichtung 10 umfasst ein Montageteil 12, welches eine Gebereinrichtung 14 einer Geber-Sensor-Anordnung 16 hält.

Die Geber-Sensor-Anordnung 16 umfasst zusätzlich zu der Gebereinrichtung 14 eine Sensoreinrichtung 18 mit einer Mehrzahl von magnetfeldsensitiven Sensorelementen, wie unten noch näher erläutert wird. Die Sensoreinrichtung 18 ist in einem Raum 20 vor der Gebereinrichtung 14 angeordnet.

Die Kraftmessvorrichtung 10 lässt sich über das Montageteil 12 an einer Anwendung fixieren. Beispielsweise ist die Kraftmessvorrichtung 10 zur Montage an einem Fahrzeug und insbesondere einem Kraftfahrzeug vorgesehen. Über das Montageteil 12 wird die Kraftmessvorrichtung 10 beispielsweise an der Oberschiene einer Fahrzeugsitzhalterung montiert.

An dem Montageteil 12 sitzt ein elastisch ausgebildeter Kraftaufnehmer 22. Dieser ist insbesondere als Hohlstab 24 ausgebildet. Der Hohlstab 24 weist einen Innenraum 26 auf. Der Raum 20 ist Teil des Innenraums 26. In dem Innenraum 26 sind die Sensoreinrichtung 18 und Magnete 28 der magnetfelderzeugende Gebereinrichtung 14 positioniert.

Der Hohlstab 24 erstreckt sich in einer Längsrichtung 30. Der Innenraum 26 ist beispielsweise zylindrisch mit einer Achse, welche mit der Längsrichtung 30 zusammenfällt.

Es kann vorgesehen sein, dass der Kraftaufnehmer 22 Schwächungszonen aufweist, welche beispielsweise durch Ausnehmungen an einer Außenseite des Hohlstabs 24 gebildet sind. Beispielsweise sind zwei in Längsrichtung beabstandete Schwächungszonen vorgesehen. Die Schwächungszonen können dabei ringförmig oder kegelmantelförmig ausgebildet sein. Durch die Schwächungszonen werden Gelenkstellen gebildet, die dem Kraftaufnehmer 22 die Funktion eines Parallelogramm-Kraftaufnehmers verleihen.

Die Gebereinrichtung 14 ist in einer beispielsweise zylindrischen Ausnehmung 32 des Montageteils 12 fixiert. Die Gebereinrichtung 14 weist dazu einen Haltesockel 34 auf. An dem Haltesockel sitzt eine Halteeinrichtung 36 für die Magnete 28.

Die Gebereinrichtung 14 ist ohne Kontakt mit dem Hohlstab 24 in dessen Innenraum 26 positioniert.

Das Montageteil 12 weist einen ringförmigen Flansch 38 mit einer ringförmigen Ausnehmung 40 auf. In der Ausnehmung 40 ist eine Krafteinleitungseinrichtung 42 positioniert, über die sich Kräfte in den Kraftaufnehmer 22 einleiten lassen. Die Krafteinleitungseinrichtung 42 sitzt mit Spiel in der Ausnehmung 40.

Die Krafteinleitungseinrichtung 42 ist beispielsweise hohlzylindrisch ausgebildet und liegt koaxial zu dem Kraftaufnehmer 22. Sie weist einen Krafteinleitungsbereich 44 auf, welcher einen freien Endbereich des Kraftaufnehmers 22 fasst. Über den anderen Endbereich des Kraftaufnehmers 22 ist dieser an dem Montageteil 12 fest gehalten.

Die Krafteinleitungseinrichtung 42 weist ferner einen Halteendbereich 46 auf, welcher in die Ausnehmung 40 des Montageteils 12 eingetaucht ist. Solange zulässige Kräfte auf die Krafteinleitungseinrichtung 42 wirken, kann diese sich aufgrund des Spiels in der Ausnehmung 40 ungehindert bewegen. Wenn die einwirkende Kräfte unzulässig groß werden, dann verhindert ein Anschlagring 48, welcher zwischen dem Halteendbereich 46 und einer die Ausnehmung 40 begrenzenden Wandung des Flansches 38 angeordnet ist, eine weitere Bewegung der Krafteinleitungseinrichtung 42 und verhindert dadurch eine Beschädigung des Kraftaufnehmers 22.

Der Anschlagring 48 ist an dem Montageteil 12 beispielsweise durch Laserschweißung fixiert. Er kann dabei in einer entsprechenden Ausnehmung 50 des Montageteils 12, welches sich an die Ausnehmung 40 anschließt, angeordnet sein.

Der Kraftaufnehmer 22 ist elastisch verformbar. Dadurch kann er Kräfte, wie beispielsweise Gewichtskräfte, aufnehmen.

Die Sensoreinrichtung 18 ist mit dem Kraftaufnehmer 22 verbunden (in Figur 1 nicht gezeigt), so dass sich bei einer Einleitung von Kräften über den Kraftaufnehmer 22 die Sensoreinrichtung 18 relativ zu der Gebereinrichtung 14 bewegt bzw. bezogen auf eine Null-Lage die Sensoreinrichtung 18 gegenüber der Gebereinrichtung 14 ausgelenkt wird.

Die Sensoreinrichtung 18 umfasst einen Halter 52, an welchem Sensorelemente sitzen. Dieser Halter 52 ist mit dem Kraftaufnehmer 22 verbunden, so dass eine Verformung des elastischen Kraftaufnehmers 22 zu einer Aus lenkung des Halters 52 und damit der daran angeordneten Sensorelemente relativ zu der Gebereinrichtung 14 führt. Diese relative Auslenkung ist eine relative Auslenkung zu den Magneten 28 der Gebereinrichtung 14, so dass sich das Magnetfeld, mit welchem die Sensoreinrichtung 18 beaufschlagt wird, verändert. Aus dieser Veränderung des Magnetfelds (bezogen auf das Magnetfeld bei einer unausgelenkten Position der Sensoreinrichtung 18 relativ zu der Gebereinrichtung 14) lässt sich die auf den Kraftaufnehmer 22 wirkende Kraft ermitteln.

Durch die erfindungsgemäße Lösung, welche auch als Wegmessvorrichtung oder Druckmessvorrichtung realisierbar ist, lässt sich über die relative Auslenkung zwischen der Sensoreinrichtung 18 und der Gebereinrichtung 14 auch ein Weg ermitteln bzw. es lässt sich ein Druck ermitteln.

Die Magnete 28 der Gebereinrichtung 14 sind beispielsweise in Ausnehmungen 54 der Halteeinrichtung 36 der Gebereinrichtung 14 angeordnet.

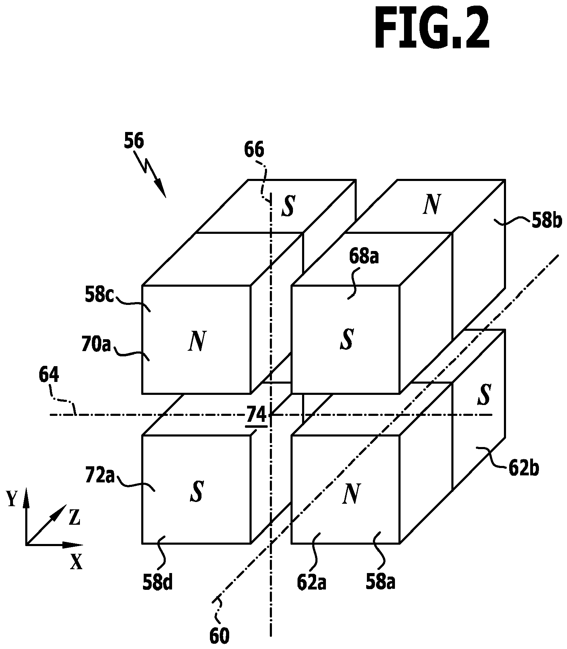

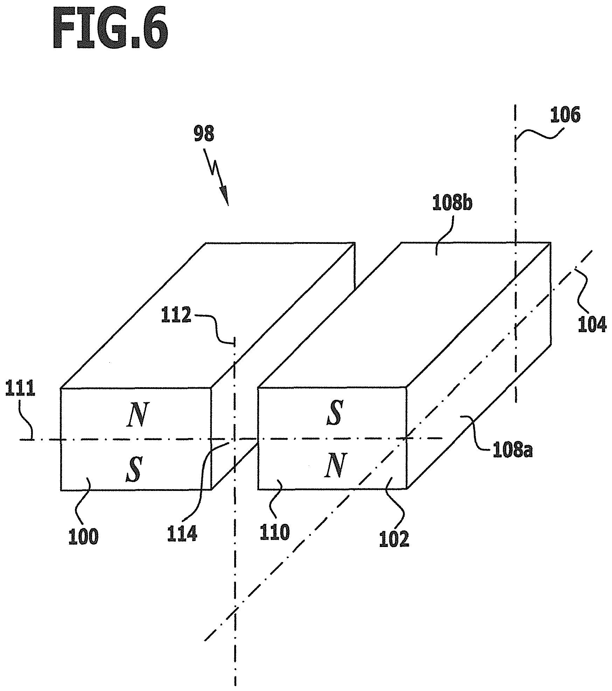

Die Gebereinrichtung 14 weist eine Quadrupolanordnung 56 (beispielsweise Figur 2 oder Figur 6) der Magnete 28 auf. Eine solche Quadrupolanordnung 56 lässt sich durch zwei Magnete oder durch vier Magnete realisieren.

Bei der Quadrupolanordnung 56 umfasst die Gebereinrichtung 14 vier beabstandete Magnete 58a, 58b, 58c, 58d. Diese Magnete sind als Permanentmagnete ausgebildet. Beispielsweise handelt es sich bei den Magneten 58a, 58b, 58c, 58d um Stabmagnete, welche sich in einer Erstreckungsrichtung 60 erstrecken. Die Magnete 58a, 58b, 58c, 58d sind jeweils quaderförmig ausgebildet. Diese Erstreckungsrichtung 60 ist die längste Erstreckungsrichtung. Quer zur Erstreckungsrichtung 60 weisen die Magnete beispielsweise einen quadratischen Querschnitt auf.

Zwischen nächstbenachbarten Magneten (58a, 58b; 58b, 58c; 58c, 58d; 58d, 58a) liegt jeweils ein kleiner Luftspalt (in den Figuren 2 bis 4 ist er übertrieben groß gezeigt), dessen Breite beispielsweise in der Größenordnung von 1 mm liegt. (Der Begriff Luftspalt bezieht sich auf das Magnetfeld; der Spalt kann durch ein Festkörpermaterial ausgefüllt sein.)

Magnetpole 62a, 62b (Nord-, Südpol) folgen in der längsten Erstreckungsrichtung 60 auf einander.

Die Magnete 58a, 58b, 58c, 58d sind vorzugsweise geometrisch gleich ausgebildet. Sie sind geometrisch symmetrisch zu einer ersten Mittelebene 64 angeordnet. Die Längsrichtung 30 geht dabei durch die erste Mittelebene 64. Ferner sind sie geometrisch symmetrisch zu einer zweiten Mittelebene 66 angeordnet, welche quer und insbesondere senkrecht zur ersten Mittelebene 64 ist. Die Längsrichtung 30 geht ebenfalls durch die zweite Mittelebene 66 und fällt insbesondere mit einer Schnittlinie der ersten Mittelebene 64 und der zweiten Mittelebene 66 zusammen. Die längste Erstreckungsrichtung 60 der Magnete 58a, 58b, 58c, 58d ist sowohl parallel zur ersten Mittelebene 64 als auch zur zweiten Mittelebene 66.

Der Magnet 58a weist einen Magnetpol 62a auf, welcher in den Raum 20 vor der Gebereinrichtung weist. Ferner weist der Magnet 58b einen Magnetpol 68a auf, welcher in den Raum 20 weist. Der Magnet 58c weist einen Magnetpol 70a auf, welcher in den Raum 20 weist. Der Magnet 58d weist einen Magnetpol 72a auf, welcher in den Raum 20 weist. Die Magnetpole 62a, 68a, 70a und 72a sind bezüglich der ersten Mittelebene 64 und der zweiten Mittelebene 66 antisymmetrisch angeordnet, das heißt das Vorzeichen der Magnetpole ist bezogen auf die erste Mittelebene 64 und die zweite Mittelebene 66 antisymmetrisch. (Unter Vorzeichen eines Magnetpols wird hier eine Zuweisung eines positiven Werts beispielsweise zum Nordpol und eines negativen Werts zum Südpol verstanden.) Dadurch weisen nächstbenachbarte Magnetpole (wie die Magnetpole 62a und 68a, die Magnetpole 68a und 70a, die Magnetpole 70a und 72a und die Magnetpole 72a und 62a) ein unterschiedliches Vorzeichen auf. Diagonal gegenüberliegende Magnetpole (wie die Magnetpole 70a, 62a und 68a, 72a) weisen das gleiche Vorzeichen auf. Die Magnetpole 62a, 68a, 70a, 72a weisen ein in einer "Umlaufrichtung" alternierendes Vorzeichen auf.

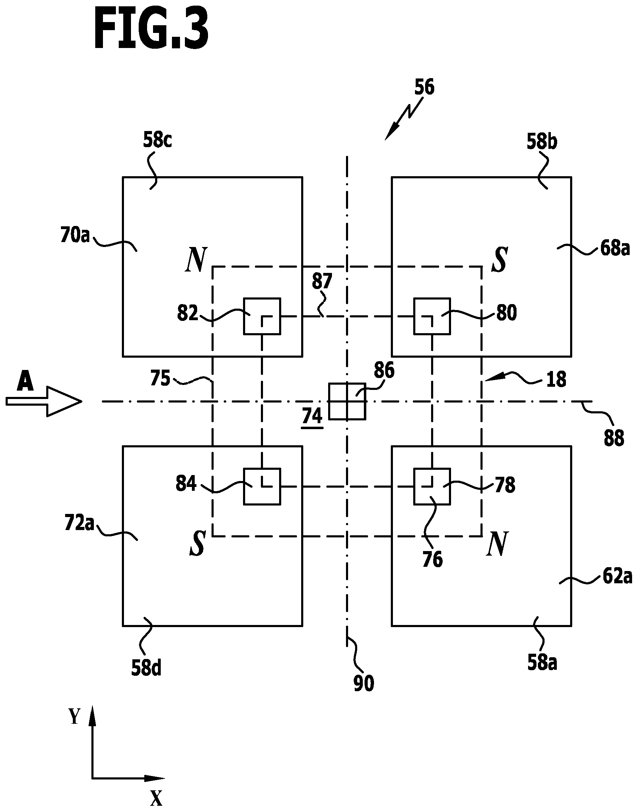

Die Magnetpole 62a, 68a, 70a, 72a liegen mit ihrem Zentrum auf den Ecken eines Vierecks 75 (Figur 3). Dieses Viereck 75 ist insbesondere ein (ebenes) Rechteck und vorzugsweise ein Quadrat. Die Mittelebenen 64 und 66 sind Mittelebenen dieses Vierecks 75.

Die Quadrupolanordnung 56 hat einen zentralen Bereich 74 im Bereich der Schnittlinie der ersten Mittelebene 64 und der zweiten Mittelebene 66, welcher mindestens näherungsweise magnetfeldfrei ist.

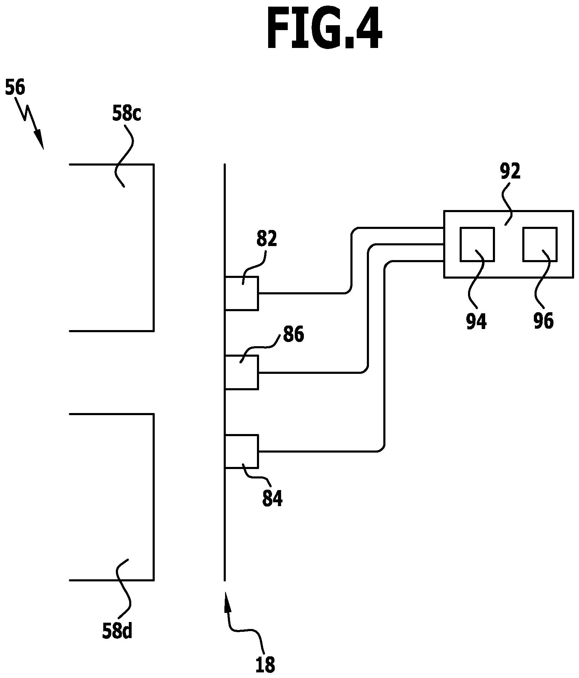

Die Sensoreinrichtung 18 umfasst eine Mehrzahl von Sensorelementen 76 (Figuren 3 und 4), wobei jedem Magnetpol 62a, 68a, 70a, 72a ein eigenes Sensorelement zugeordnet ist: Dem Magnetpol 62a ist ein erstes Sensorelement 78 zugeordnet, dem Magnetpol 68a ist ein zweites Sensorelement 80 zugeordnet, dem Magnetpol 70a ist ein drittes Sensorelement 82 zugeordnet und dem Magnetpol 72a ist ein viertes Sensorelement 84 zugeordnet. Weiterhin ist dem zentralen Bereich 74 ein fünftes Sensorelement 86 zugeordnet.

Die Sensorelemente 78, 80, 82 und 84 sind in einem Projektionsraum vor den jeweiligen zugeordneten Magnetpolen angeordnet. Sie sind so positioniert, dass sie bei allen möglichen Auslenkungen der Sensoreinrichtung 18 relativ zur Gebereinrichtung 14 die Magnetfeldstärke so erfassen können, dass eine sichere Kraftmessung ermöglicht ist.

Die Sensorelemente 78, 80, 82, 84 sind mit ihrem Zentrum ebenfalls auf den Ecken eines Vierecks 87 und insbesondere Quadrats positioniert. Das fünfte Sensorelement 86 liegt auf der Diagonalen dieses Vierecks.

Die Sensorelemente 78, 80, 82 und 84 sind symmetrisch zu einer ersten Mittelebene 88 und symmetrisch zu einer zweiten Mittelebene 90 angeordnet, wobei die zweite Mittelebene 90 quer und insbesondere senkrecht zur ersten Mittelebene 88 orientiert ist.

Bei einer Nullstellung der Sensoreinrichtung 18, wenn der Kraftaufnehmer 22 nicht kraftbeaufschlagt ist, fällt die erste Mittelebene 88 mit der ersten Mittelebene 64 der Gebereinrichtung 14 zusammen und die zweite Mittelebene 90 fällt mit der zweiten Mittelebene 66 der Gebereinrichtung 14 zusammen.

Das Viereck 75 der Quadrupolanordnung 56 und das Viereck 87 der Sensoreinrichtung 18 sind kongruent zueinander, d.h. sie weisen parallele Seiten auf.

Die Kraftmessvorrichtung 10 umfasst eine Auswertungseinrichtung 92 bzw. der Kraftmessvorrichtung 10 ist eine Auswertungsvorrichtung 92 zugeordnet (Figur 4). Die Auswertungsvorrichtung kann dabei außerhalb eines Gehäuses der Kraftmessvorrichtung 10 und insbesondere außerhalb des Hohlstabs 24 angeordnet sein oder sie kann innerhalb des Gehäuses angeordnet sein. Beispielsweise ist sie in dem Innenraum 26 des Hohlstabs 24 angeordnet.

An der Auswertungseinrichtung 92 werden die Signale der unterschiedlichen Sensorelemente 78, 80, 82, 84, 86 verknüpft. Dadurch lässt sich beispielsweise eine differentielle Wegmessung bzw. Kraftmessung durchführen. Es ist auch beispielsweise möglich, Störfelder zu berücksichtigen und zu kompensieren.

Die Auswertungseinrichtung 92 umfasst beispielsweise eine Differenzbildungseinheit 94, durch welche eine Differenz zwischen Signalen unterschiedlicher Sensorelemente (wie der Sensorelemente 78 und 80 bzw. 82 und 84 oder der Sensorelemente 78 und 84 bzw. 80 und 82) durchführbar ist. Ferner umfasst die Auswertungseinrichtung 92 eine Summierungseinheit 96, durch welche die Signale unterschiedlicher Sensorelemente aufsummierbar sind.

Die erfindungsgemäße Kraftmessvorrichtung 10 mit der Quadrupolanordnung 56 funktioniert wie folgt:

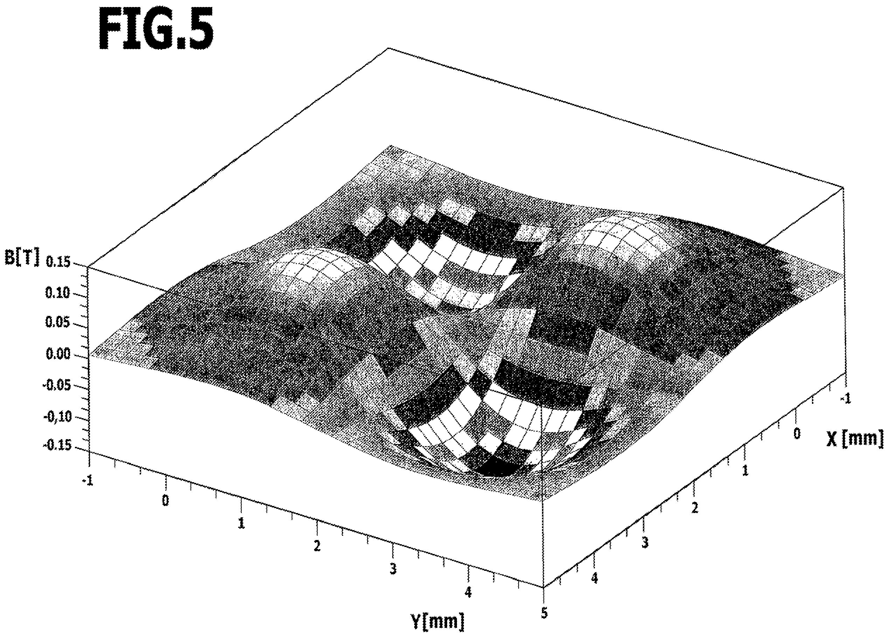

In Figur 5 ist der Feldverlauf in einer x-y-Ebene gezeigt. Das x-y-z-Koordinatensystem ist in Figur 2 eingezeichnet. Die x-y-Ebene ist die Ebene, zu welcher die Längsrichtung 30 und die längste Erstreckungsrichtung 60 der Magnete senkrecht steht. Die x-y-Ebene liegt senkrecht zu der ersten Mittelebene 64 und senkrecht zu der zweiten Mittelebene 66. Die z-Position des Magnetfeldverlaufs ist diejenige an der Sensoreinrichtung 18.

Der Luftspalt zwischen den Magneten der Quadrupolanordnung 56 betrug 1 mm.

Die "Hügel" in dem Feldlinienverlauf gemäß Figur 5 entsprechen den Magnetpolen 70a und 62a (Nordpole); die Täler entsprechen den Magnetpolen 72a und 68a (Südpole).

Die Sensorelemente 78, 80, 82, 84 und 85 sind magnetfeldsensitiv. Beispielsweise sind diese Sensorelemente als Hall-Sensorelemente ausgebildet. Insbesondere sind die Sensorelemente durch Hall-Plättchen gebildet. Die Hall-Plättchen sind so orientiert, dass ihre Seite, welche die größte Höhe aufweist, parallel zur x-y-Ebene ausgerichtet ist.

Durch entsprechende Auswertung kann sowohl die x-Komponente als auch die y-Komponente einer auf den Kraftaufnehmer 22 einwirkenden Kraft bestimmt werden bzw. es lässt sich sowohl eine x-Wegbestimmung als auch eine y-Wegbestimmung durchführen. Dadurch ist die Kraft auch bei beliebigem Krafteinleitungswinkel in den Kraftaufnehmer 22 bestimmbar. Dadurch wiederum ist die Einbauorientierung der Kraftmessvorrichtung 10 grundsätzlich beliebig.

Das erste Sensorelement 78 und das zweite Sensorelement 80 weisen eine Verbindungsrichtung auf, welche eine Normalenrichtung der ersten Mittelebene 88 ist. Ebenso ist die Verbindungsrichtung des dritten Sensorelements 82 und des vierten Sensorelements 84 eine Normalenrichtung der ersten Mittelebene 88. Eine Verbindungsrichtung des zweiten Sensorelements 80 und des dritten Sensorelements 82 sowie des vierten Sensorelements 84 und des ersten Sensorelements 78 ist eine Normalenrichtung der zweiten Mittelebene 90. Die x-Komponente einer einwirkenden Kraft lässt sich durch Differenzbildung (durchgeführt durch die Differenzbildungseinheit 94) der Signale der Sensorelemente 82 und 84 bzw. 80 und 78 erhalten. Die y-Komponente lässt sich durch Differenzbildung zwischen den Signalen der Sensorelemente 80 und 82 bzw. 78 und 84 erhalten. Durch die Differenzbildung werden auch Störanteile, die in den Sensorsignalen mit gleichem Betrag enthalten sind, eliminiert.

Durch das fünfte Sensorelement 86 lässt sich ein Störmagnetfeld wie beispielsweise ein externes Störmagnetfeld in dem zentralen Bereich 74 der Gebereinrichtung 14 bestimmen und bei der Signalauswertung berücksichtigen.

Durch Auswertung der Signale der vier Sensorelemente 78 bis 84 lässt sich beispielsweise auch eine Torsion bestimmen. Eine Torsion kann eine Verdrehung um die z-Achse senkrecht zur x-Richtung und y-Richtung sein oder auch eine Drehung um eine Achse in der x-y-Ebene.

Weiterhin lässt sich die z-Komponente des Magnetfelds über eine nichtlineare Hauptpolnäherung bestimmen. Beispielsweise werden dazu über die Summierungseinheit 96 die Signale diagonal gegenüberliegender Sensorelemente (wie beispielsweise Signale des ersten Sensorelements 78 und des dritten Sensorelements 82 oder die Signale des zweiten Sensorelements 80 und des vierten Sensorelements 84) summiert. Über Messung eines Störfelds über das fünfte Sensorelement 86 und Berücksichtigung dieses Störfelds bei der Auswertung lässt sich die nichtlineare Hauptpolnäherung durchführen.

Durch die erfindungsgemäße Lösung lässt sich eine Kraftmessvorrichtung 10 bereitstellen, durch welche x-Komponenten und y-Komponenten von wirkenden Kräften bestimmbar sind. Es lässt sich eine getrennte x-Wegmessung und y-Wegmessung durchführen. Durch eine differentielle Auswertung lassen sich Störfelder kompensieren. Durch das fünfte Sensorelement 86 lassen sich Störfelder in dem zentralen Bereich 74 messen und beispielsweise für eine nichtlineare Hauptpolnäherung zur Auswertung der z-Komponente des Magnetfelds berücksichtigen.

Durch die Kraftmessvorrichtung 10 lassen sich Kräfte messen (und auch in ihrer Richtung unterscheiden), welche in mehr als einer Richtung auf den Kraftaufnehmer 22 wirken.

Weiterhin lässt sich eine hohe Genauigkeit der Messung erreichen.

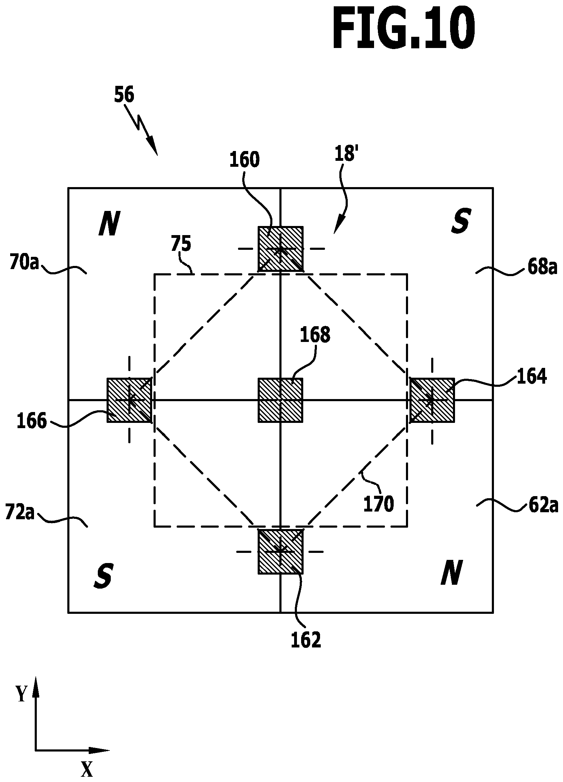

Bei dem Ausführungsbeispiel gemäß Figur 3 ist jedem Magnetpol genau ein eigenes Sensorelement zugeordnet. Es ist auch möglich, dass jedem Magnetpolpaar ein eigenes Sensorelement zugeordnet ist. Bei einem Ausführungsbeispiel einer entsprechenden Sensoreinrichtung 18', welches schematisch in Figur 10 gezeigt ist, ist ein Sensorelement einem Magnetpolpaar zugeordnet. Die Anordnung der Magnetpole entspricht dabei der Quadrupolanordnung 56. Entsprechend werden gleiche Bezugszeichen verwendet. Die Magnetpole 68a und 70a bilden ein erstes Magnetpolpaar. Die Magnetpole 62a und 72a bilden ein zweites Magnetpolpaar. Die Magnetpole 62a und 68a bilden ein drittes Magnetpolpaar und die Magnetpole 70a und 72a bilden ein viertes Magnetpolpaar. Dem ersten Magnetpolpaar 68a, 70a ist ein erstes Sensorelement 160 zugeordnet. Dem zweiten Magnetpolpaar 62a, 72a ist ein zweites Sensorelement 162 zugeordnet. Dem dritten Magnetpolpaar 62a, 68a ist ein drittes Sensorelement 164 zugeordnet. Dem vierten Magnetpolpaar 70a, 72a ist ein viertes Sensorelement 166 zugeordnet. Ein fünftes Sensorelement 168 ist dem zentralen Bereich 74 der Quadrupolanordnung 56 zugeordnet.

In einem nicht ausgelenkten Zustand der Sensoreinrichtung 18' gegenüber der Quadrupolanordnung 56 liegen die entsprechenden Sensorelemente in den Projektionsräumen der Magnetpole, welchen sie zugeordnet sind. Beispielsweise ist das erste Sensorelement 160 sowohl durch den Magnetpol 68a als auch durch den Magnetpol 70a feldbeaufschlagt, wobei im nicht ausgelenkten Zustand das erste Sensorelement 160 symmetrisch zu dem Magnetpol 68a und zu dem Magnetpol 70a angeordnet ist. Auf die gleiche symmetrische Weise sind die anderen Sensorelemente 162, 164 und 166 bezüglich der entsprechenden Magnetpole angeordnet.

Die Sensorelemente 160, 162, 164, 166 liegen auf den Ecken eines Vierecks 170. Dieses Viereck 170 ist gegenüber dem Viereck 75 gedreht. Bei dem in Figur 10 gezeigten Ausführungsbeispiel liegt der Drehwinkel bei 45°. Die Seiten des Vierecks 75 und des Vierecks 170 sind dadurch nicht parallel. Dementsprechend fallen die Mittelebenen der Sensoreinrichtung 18' auch nicht mit den Mittelebenen 64 und 66 der Quadrupolanordnung 56 zusammen, sondern sind gegenüber dieser (beispielsweise um einen Winkel von 45°) gedreht.

Durch die Sensoreinrichtung 18' ist es bei der Montage der entsprechenden Kraftmessvorrichtung möglich, entsprechende Sensorelementpaare (erstes Sensorelement 160 und zweites Sensorelement 162; drittes Sensorelement 164 und viertes Sensorelement 166) auf der Nullfeld-Linie auf einfache Weise auszurichten.

Ansonsten funktioniert die entsprechende Kraftmessvorrichtung wie oben beschrieben.

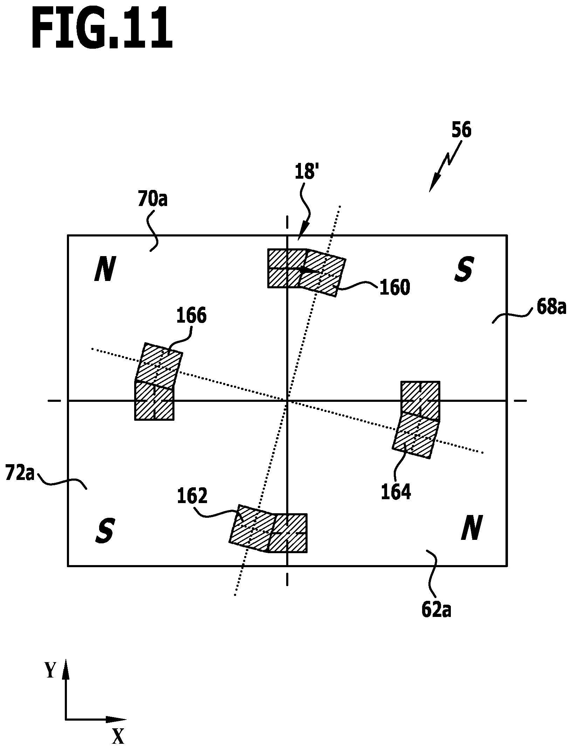

Beispielsweise lassen sich durch Verarbeitung der Sensorsignale Drehungen der Sensoreinrichtung 18' relativ zur Quadrupolanordnung 56 ermitteln. Dies ist in Figur 11 angedeutet.

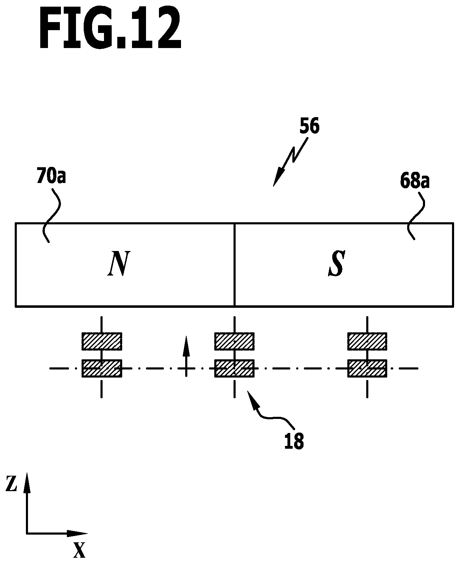

Weiterhin ist es möglich, den Abstand (in der y-Richtung) zwischen der Sensoreinrichtung 18 und der Quadrupolanordnung 56 zu ermitteln. Dies ist in Figur 12 angedeutet.

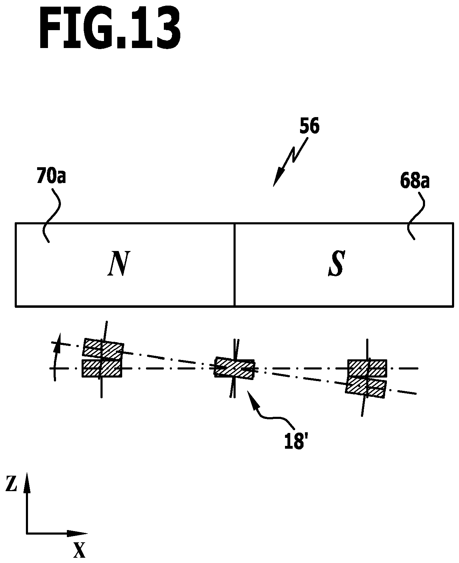

Es ist beispielsweise durch eine nichtlineare Multipolnäherung auch möglich, eine Drehung der Sensoreinrichtung 18' relativ zur Quadrupolanordnung 56 insbesondere um eine Achse parallel zur y-Achse zu ermitteln. Dies ist in Figur 13 angedeutet.

Bei einem zweiten Ausführungsbeispiel einer Quadrupolanordnung, welche in Figur 6 gezeigt und dort mit 98 bezeichnet ist, sind ein erster Magnet 100 und ein zweiter Magnet 102 parallel nebeneinander beabstandet angeordnet. Die beiden Magnete 100 und 102 sind Permanentmagnete, welche quaderförmig ausgebildet sind. Sie weisen jeweils eine längste Erstreckungsrichtung 104 auf. Quer zu dieser längsten Erstreckungsrichtung weisen sie eine Erstreckungsrichtung 106 auf. In dieser Erstreckungsrichtung 106 folgen die Magnetpole unterschiedlichen Vorzeichens (Nordpol und Südpol) 108a, 108b auf einander. Eine jeweilige Stirnseite 110 der Magnete 100 und 102 weist in den Raum 20 vor der Gebereinrichtung 14.

Die Magnete 100 und 102 der Quadrupolanordnung 98 sind geometrisch symmetrisch zu einer ersten Mittelebene 111 und zu einer quer dazu liegenden zweiten Mittelebene 112 angeordnet. Die Magnetpole 108a, 108b sind bezüglich des Vorzeichens antisymmetrisch zu diesen Mittelebenen 111 und 112; Nordpol und Südpol folgen alternierend auf einander, wobei nächstliegende Magnetpole unterschiedliche Vorzeichen aufweisen und diagonal gegenüberliegende Magnetpole das gleiche Vorzeichen aufweisen.

Bei der Quadrupolanordnung 98 ist das Quadrupolfeld, welches zu der Sensoreinrichtung 18 weist, durch zwei Magnete 100, 102 anstatt durch vier Magnete wie bei der Quadrupolanordnung 56 realisiert.

Die Sensoreinrichtung 18 ist grundsätzlich gleich ausgebildet wie oben beschrieben.

Es ist auch möglich, dass die Sensoreinrichtung nicht jedem Magnetpol ein eigenes Sensorelement zuordnet, sondern dass einem Magnetpolpaar ein Sensorelement zugeordnet ist. In diesem Fall ist ein erstes Sensorelement und ein zweites Sensorelement vorgesehen. Einem zentralen Bereich 114 der Quadrupolanordnung 98 kann ein weiteres Sensorelement zugeordnet sein. Beispielsweise wird ein eigenes Sensorelement jeweils dem ersten Magneten 100 und dem zweiten Magneten 102 zugeordnet.

Bei dieser Lösung ist eine differentielle Messung durchführbar, um beispielsweise Störfelder kompensieren zu können.

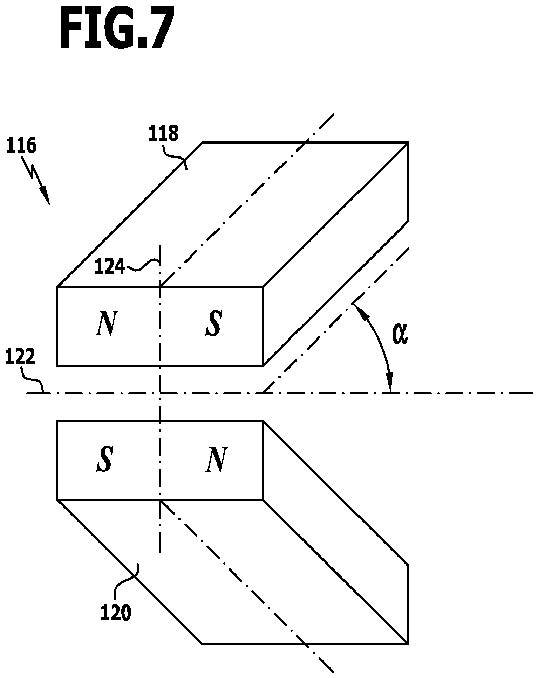

Bei einem dritten Ausführungsbeispiel einer Quadrupolanordnung, welches in Figur 7 gezeigt und dort mit 116 bezeichnet ist, sind ein erster Magnet 118 und ein zweiter Magnet 120 vorgesehen. Diese sind symmetrisch zu einer ersten Mittelebene 122 und einer quer dazu liegenden zweiten Mittelebene 124 angeordnet. Der erste Magnet 118 und der zweite Magnet 120 sind um einen spitzen Winkel α zu der ersten Mittelebene 122 geneigt. Sie sind dadurch V-förmig angeordnet. Durch eine solche winklige Anordnung lässt sich eine hohe Magnetfeldfokussierung erreichen. Dadurch lässt sich eine Kennwertverbesserung der Geber-Sensor-Anordnung realisieren. Die magnetische Energiedichte wird erhöht, so dass die Geber-Sensor-Anordnung unempfindlich gegenüber magnetischen Störfeldern ist.

Es ist dabei grundsätzlich auch möglich, dass, wenn vier Permanentmagnete vorgesehen sind wie bei der Quadrupolanordnung 56, auch eine Neigung in einem spitzen Winkel gegenüber der zweiten Mittelebene 124 vorliegt.

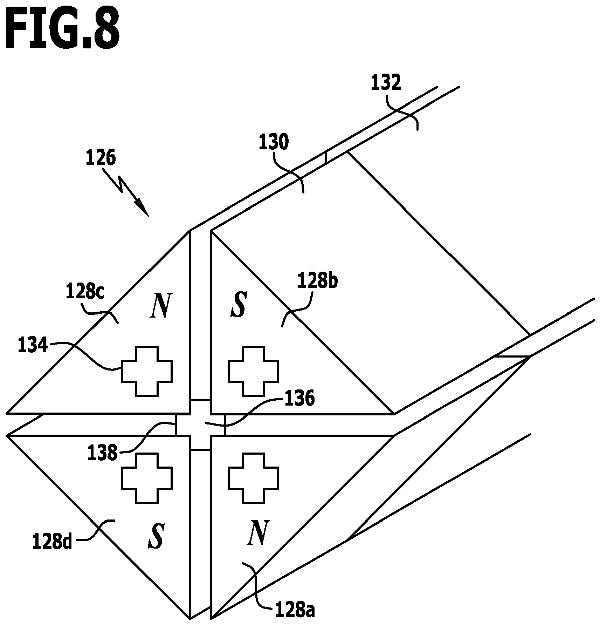

Bei einem vierten Ausführungsbeispiel einer Quadrupolanordnung, welche in Figur 8 gezeigt und dort mit 126 bezeichnet ist, sind vier Stabmagnete 128a, 128b, 128c, 128d vorgesehen. Diese weisen in der längsten Erstreckungsrichtung aufeinanderfolgende Magnetpole 130, 132 auf.

Die Stabmagnete 128a, 128b, 128c, 128d weisen jeweils einen dreieckförmigen Querschnitt auf. Das entsprechende Dreieck ist rechtwinklig gleichschenklig. Die Stabmagnete 128a, 128b, 128c, 128d sind so angeordnet, dass die kürzeren Dreiecksseiten benachbarter Stabmagnete (128a, 128b; 128b, 128c; 128c, 128d; 128d, 128a) parallel beabstandet sind.

Jedem Magnetpol 130 ist ein eigenes Sensorelement 134 zugeordnet. Ferner ist einem zentralen Bereich 136 ein eigenes Sensorelement 138 zugeordnet.

Die Quadrupolanordnung 126 lässt sich kompakt ausbilden mit geringen Querabmessungen.

Die entsprechende Kraftmessvorrichtung funktioniert ansonsten wie oben beschrieben.

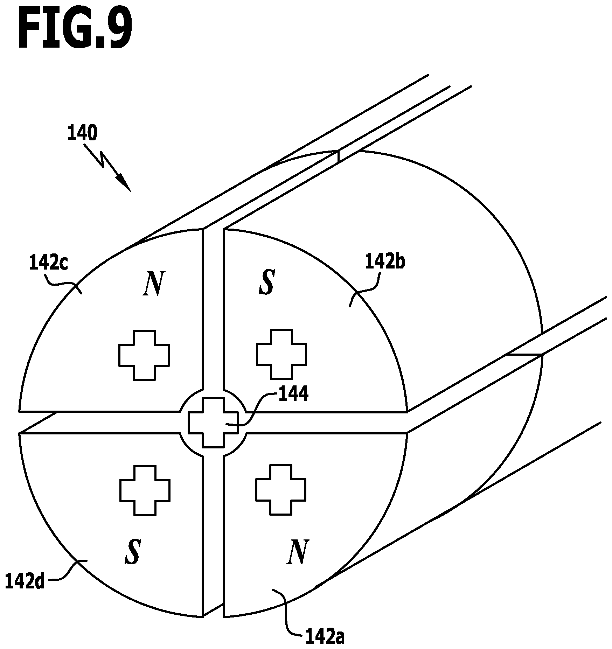

Bei einem fünften Ausführungsbeispiel einer Quadrupolanordnung, welches in Figur 9 gezeigt und dort mit 140 bezeichnet ist, sind Stabmagnete 142a, 142b, 142c, 142d vorgesehen, welche einen Querschnitt aufweisen, der mindestens näherungsweise einem Viertelkreis mit einem ausgenommenen zentralen Bereich 144 entspricht. Die Stabmagnete 142a, 142b, 142c, 142d sind so zusammengesetzt, dass die Quadrupolanordnung 140 eine im Wesentlichen kreisförmige Außenumfangs-Querschnittslinie aufweist.

Jedem Magnetpol ist wiederum ein eigenes Sensorelement zugeordnet und dem zentralen Bereich 144 ist ebenfalls ein eigenes Sensorelement zugeordnet.

Die Ausbildung der Quadrupolanordnung 140 entspricht derjenigen der Quadrupolanordnung 126, jedoch mit anderer Querschnittsgestaltung der einzelnen Stabmagnete 142a, 142b, 142c, 142d.

Die Quadrupolanordnung 140 funktioniert ansonsten so wie oben beschrieben.

## Patentansprüche

1. Kraftmessvorrichtung, umfassend eine magnetfelderzeugende Gebereinrichtung (14) mit einer Mehrzahl von Magneten (28), und eine magnetfeldsensitive Sensoreinrichtung (18; 18'), welche in einem Raum (20) vor der Gebereinrichtung (14) angeordnet ist, wobei die Gebereinrichtung (14) und die Sensoreinrichtung (18) unter Krafteinfluss relativ zueinander beweglich sind, wobei die Magnete (28) der Gebereinrichtung (14) in einer Quadrupolanordnung (56; 98; 116; 126; 140) bezüglich der Sensoreinrichtung (18; 18') positioniert sind, wobei die Gebereinrichtung (14) eine erste Mittelebene (64) aufweist, zu welcher die Magnete (28) geometrisch symmetrisch angeordnet sind, und die Gebereinrichtung (14) eine zweite Mittelebene (66) aufweist, welche quer zur ersten Mittelebene (64) ist, zu welcher die Magnete (28) geometrisch symmetrisch angeordnet sind, und wobei die Sensoreinrichtung (18) mindestens ein erstes Sensorelement (78) und ein zweites Sensorelement (80) aufweist, wobei das erste Sensorelement (78) einem ersten Magnetpol (62a) oder einem ersten Magnetpolpaar zugeordnet ist und das zweite Sensorelement (80) einem zweiten Magnetpol (68a) oder zweiten Magnetpolpaar zugeordnet ist, **dadurch gekennzeichnet, dass** einem zentralen Bereich (74) der Quadrupolanordnung ein eigenes Sensorelement (86) zugeordnet ist, wobei der zentrale Bereich (74) im Bereich der Schnittlinie der ersten Mittelebene (64) und der zweiten Mittelebene (66) liegt und der zentrale Bereich (74) mindestens näherungsweise magnetfeldfrei ist.

2. Kraftmessvorrichtung nach Anspruch 1, **dadurch gekennzeichnet, dass** die Gebereinrichtung (14) zwei Magnete (100, 102) oder vier Magnete (58a, 58b, 58c, 58d) umfasst, und insbesondere, dass die Gebereinrichtung (14) Stabmagnete (58a, 58b, 58c, 58d) umfasst, deren Magnetpole (62a, 62b) entlang der längsten Erstreckungsachse (60) liegen.

3. Kraftmessvorrichtung nach einem der vorangehenden Ansprüche, **dadurch gekennzeichnet, dass** die Gebereinrichtung (14) Magnete (100, 102) umfasst, deren Magnetpole (108a, 108b) entlang einer Erstreckungsachse (106) liegen, welche quer zur längsten Erstreckungsachse (104) ist.

4. Kraftmessvorrichtung nach einem der vorangehenden Ansprüche, **dadurch gekennzeichnet, dass** die Magnetpolvorzeichen zu der ersten Mittelebene (64) antisymmetrisch sind, und insbesondere, dass die Magnetpolvorzeichen zur zweiten Mittelebene (66) antisymmetrisch sind.

5. Kraftmessvorrichtung nach einem der vorangehenden Ansprüche, **dadurch gekennzeichnet, dass** ein oder mehrere Magnete (118; 120) in einem spitzen Winkel (a) bezogen auf die erste Mittelebene und/oder zweite Mittelebene angeordnet sind, und insbesondere, dass ein Schnittpunkt von Erstreckungsachsen von Magneten (118, 120), welche in einem spitzen Winkel angeordnet sind, in dem Raum (20) vor der Gebereinrichtung (14) liegt.

6. Kraftmessvorrichtung nach einem der vorangehenden Ansprüche, **dadurch gekennzeichnet, dass** jedem Magnetpol (62a; 68a; 70a; 72a) mindestens ein Sensorelement (78; 80; 82; 84) zugeordnet ist, und insbesondere, dass die Sensoreinrichtung (18; 18') ein drittes Sensorelement (82) und viertes Sensorelement (84) umfasst.

7. Kraftmessvorrichtung nach einem der vorangehenden Ansprüche, **dadurch gekennzeichnet, dass** die Sensorelemente (78, 80, 82, 84, 86) der Sensoreinrichtung (18; 18') symmetrisch zu einer ersten Mittelebene (88) angeordnet sind, und insbesondere, dass die Sensorelemente (78, 80, 82, 84, 86) der Sensoreinrichtung (18; 18') symmetrisch zu einer zweiten Mittelebene (90) angeordnet sind, welche quer zur ersten Mittelebene (88) ist, und insbesondere, dass die erste Mittelebene (88) der Sensoreinrichtung (18) mit der ersten Mittelebene (64) der Gebereinrichtung (14) zusammenfällt, wenn keine relative Auslenkung zwischen Gebereinrichtung (14) und Sensoreinrichtung (18) vorliegt.

8. Kraftmessvorrichtung nach Anspruch 7, **dadurch gekennzeichnet, dass** die erste Mittelebene der Sensoreinrichtung (18') in einem Winkel zu einer ersten Mittelebene (64) der Gebereinrichtung (14) liegt.

9. Kraftmessvorrichtung nach Anspruch 7 oder 8, **dadurch gekennzeichnet, dass** die zweite Mittelebene (90) der Sensoreinrichtung (18) mit der zweiten Mittelebene (66) der Gebereinrichtung (14) zusammenfällt, wenn keine relative Auslenkung zwischen Gebereinrichtung (14) und Sensoreinrichtung (18) vorliegt.

10. Kraftmessvorrichtung nach einem der Ansprüche 7 bis 9, **dadurch gekennzeichnet, dass** die zweite Mittelebene der Sensoreinrichtung (18') in einem Winkel zu der zweiten Mittelebene (66) der Gebereinrichtung (14) liegt.

11. Kraftmessvorrichtung nach einem der vorangehenden Ansprüche, **dadurch gekennzeichnet, dass** Sensorelemente (78, 80, 82, 84) der Sensoreinrichtung (18) an den Ecken eines Vierecks angeordnet sind, und insbesondere, dass das Viereck (87; 170) der Sensoreinrichtung (18, 18') kongruent zu einem Viereck (75) ist, auf dessen Ecken die Magnetpole liegen, oder in einem Winkel zu dem Viereck (75) der Magnetpole ist, und insbesondere, dass ein weiteres Sensorelement (86) an einem Diagonalenschnittpunkt des Vierecks (75) angeordnet ist.

12. Kraftmessvorrichtung nach einem der vorangehenden Ansprüche, **dadurch gekennzeichnet, dass** ein einem oder mehreren Magnetpolen zugeordnetes Sensorelement (78; 80; 82; 84) in einem Projektionsraum des oder der Magnetpole vor dem oder den Magnetpolen in Richtung der Sensoreinrichtung (18) positioniert ist.

13. Verfahren zur Signalauswertung bei einer Kraftmessvorrichtung gemäß einem der vorangehenden Ansprüche, bei dem ein Magnetfeld in einem zentralen Bereich (74) der Quadrupolanordnung durch ein Sensorelement (86) gemessen wird, welches dem zentralen Bereich zugeordnet ist.

## Claims

1. Force measuring device, comprising a transducer device (14) that has a plurality of magnets (28) and generates a magnetic field, and a sensor device (18; 18') that is sensitive to a magnetic field and is arranged in a space (20) in front of the transducer device (14), wherein the transducer device (14) and the sensor device (18) are moveable relative to each other under the action of a force, wherein the magnets (28) of the transducer device (14) are positioned in a quadrupole arrangement (56; 98; 116; 126; 140) relative to the sensor device (18; 18'), wherein the transducer device (14) has a first center plane (64), in relation to which the magnets (28) are geometrically symmetrically arranged, and the transducer device (14) has a second center plane (64), which is transverse to the first center plane (64) and in relation to which the magnets (28) are geometrically symmetrically arranged, and wherein the sensor device (18) has at least one first sensor element (78) and a second sensor element (80), wherein the first sensor element (78) is associated with a first magnetic pole (62a) or with a first pair of magnetic poles, and the second sensor element (80) is associated with a second magnetic pole (68a) or second pair of magnetic poles, **characterized in that** a central region (74) of the quadrupole arrangement has a sensor element (86) of its own associated with it, wherein the central region (74) lies in the region of the line of intersection of the first center plane (64) and the second center plane (66), and the central region (74) is at least approximately free of a magnetic field.

2. Force measuring device in accordance with Claim 1, **characterized in that** the transducer device (14) comprises two magnets (100, 102) or four magnets (58a, 58b, 58c, 58d), and in particular **in that** the transducer device (14) comprises bar magnets (58a, 58b, 58c, 58d) whose magnetic poles (62a, 62b) lie along the longest axis of extent (60).

3. Force measuring device in accordance with any one of the preceding Claims, **characterized in that** the transducer device (14) comprises magnets (100, 102) whose magnetic poles (108a, 108b) lie along an axis of extent (106) which is transverse to the longest axis of extent (104) .

4. Force measuring device in accordance with any one of the preceding Claims, **characterized in that** the signs of the magnetic poles are asymmetrical in relation to the first center plane (64), and in particular in that the signs of the magnetic poles are asymmetrical in relation to the second center plane (66).

5. Force measuring device in accordance with any one of the preceding Claims, **characterized in that** one or more magnets (118; 120) are arranged at an acute angle (α) in relation to the first center plane and/or second middle plane, and in particular **in that** a point of intersection of axes of extent of magnets (118, 120), which are arranged at an acute angle, lie in the space (20) in front of the transducer device (14).

6. Force measuring device in accordance with any one of the preceding Claims, **characterized in that** at least one sensor element (78; 80; 82; 84) is associated with each magnetic pole (62a; 68a; 70a; 72a), and in particular **in that** the sensor device (18; 18') comprises a third sensor element (82) and fourth sensor element (84).

7. Force measuring device in accordance with any one of the preceding Claims, **characterized in that** the sensor elements (78, 80, 82, 84, 86) of the sensor device (18; 18') are arranged symmetrically in relation to a first center plane (88), and in particular **in that** the sensor elements (78, 80, 82, 84, 86) of the sensor device (18; 18') are arranged symmetrically in relation to a second center plane (90) which is transverse to the first center plane (88), and in particular **in that** the first center plane (88) of the sensor device (18) coincides with the first center plane (64) of the transducer device (14) when there is no relative deflection between transducer device (14) and sensor device (18).

8. Force measuring device in accordance with Claim 7, **characterized in that** the first center plane of the sensor device (18') lies at an angle to a first center plane (64) of the transduce device (14).

9. Force measuring device in accordance with Claim 7 or 8, **characterized in that** the second center plane (90) of the sensor device (18) coincides with the second center plane (66) of the transducer device (14) when there is no relative deflection between transducer device (14) and sensor device (18).

10. Force measuring device in accordance with any one of Claims 7 to 9, **characterized in that** the second center plane of the sensor device (18') lies at an angle to the second center plane (66) of the transducer device (14).

11. Force measuring device in accordance with any one of the preceding Claims, **characterized in that** sensor elements (78, 80, 82, 84) of the sensor device (18) are arranged at the corners of a quadrilateral, and in particular **in that** the quadrilateral (87; 170) of the sensor device (18, 18') is congruent to a quadrilateral (75) at the corners of which the magnetic poles lie, or which is at an angle to the quadrilateral (75) of the magnetic poles, and in particular **in that** a further sensor element (86) is arranged at a diagonal point of intersection of the quadrilateral (75).

12. Force measuring device in accordance with any one of the preceding Claims, **characterized in that** a sensor element (78; 80; 82; 84) associated with one or more magnetic poles is positioned in a projection space of the magnetic pole or poles in front of the magnetic pole or poles in the direction of the sensor device (18).

13. Method for evaluating signals in a force measuring device in accordance with any one of the preceding Claims, in which a magnetic field in a central region (74) of the quadrupole arrangement is measured by a sensor element (86) which is associated with the central region.

## Revendications

1. Dispositif de mesure de force, comprenant un dispositif émetteur (14) générateur d'un champ magnétique doté d'une pluralité d'aimants (28), et un dispositif détecteur (18 ; 18') sensible aux champs magnétiques, disposé dans un espace (20) devant le dispositif émetteur (14), dans lequel le dispositif émetteur (14) et le dispositif détecteur (18) sont mobiles l'un par rapport à l'autre sous l'action d'une force, dans lequel les aimants (28) du dispositif émetteur (14) sont placés dans un agencement quadripolaire (56 ; 98 ; 116 ; 126 ; 140) par rapport au dispositif détecteur (18 ; 18'), dans lequel le dispositif émetteur (14) présente un premier plan médian (64) par rapport auquel les aimants (28) sont disposés avec une symétrie géométrique, et le dispositif émetteur (14) présente un deuxième plan médian (66) perpendiculaire au premier plan médian (64), par rapport auquel les aimants (28) sont disposés avec une symétrie géométrique, et dans lequel le dispositif détecteur (18) comprend au moins un premier élément détecteur (78) et un deuxième élément détecteur (80), dans lequel le premier élément détecteur (78) est associé à un premier pôle magnétique (62a) ou à une première paire de pôles magnétiques et le deuxième élément détecteur (80) est associé à un deuxième pôle magnétique (68a) ou à une deuxième paire de pôles magnétiques, **caractérisé en ce qu'**un élément détecteur (86) propre est associé à une zone centrale (74) de l'agencement quadripolaire, dans lequel la zone centrale (74) est située au niveau de la ligne d'intersection du premier plan médian (64) et du deuxième plan médian (66) et la zone centrale (74) est au moins sensiblement exempte de champ magnétique.

2. Dispositif de mesure de force selon la revendication 1, **caractérisé en ce que** le dispositif émetteur (14) comprend deux aimants (100, 102) ou quatre aimants (58a, 58b, 58c, 58d), et notamment **en ce que** le dispositif émetteur (14) comporte des barreaux magnétiques (58a, 58b, 58c, 58d) dont les pôles magnétiques (62a, 62b) sont disposés le long de l'axe d'extension le plus long (60).

3. Dispositif de mesure de force selon l'une des revendications précédentes, **caractérisé en ce que** le dispositif émetteur (14) comprend des aimants (100, 102) dont les pôles magnétiques (108a, 108b) sont disposés le long d'un axe d'extension (106) perpendiculaire à l'axe d'extension le plus long (104).

4. Dispositif de mesure de force selon l'une des revendications précédentes, **caractérisé en ce que** les signes des pôles magnétiques sont antisymétriques par rapport au premier plan médian (64), et notamment **en ce que** les signes des pôles magnétiques sont antisymétriques par rapport au deuxième plan médian (66) .

5. Dispositif de mesure de force selon l'une des revendications précédentes, **caractérisé en ce qu'**un ou plusieurs aimants (118 ; 120) sont disposés suivant un angle aigu (α) par rapport au premier plan médian et/ou au deuxième plan médian, et notamment **en ce qu'**un point d'intersection des axes d'extension des aimants (118, 120) disposés suivant un angle aigu est situé dans l'espace (20) devant le dispositif émetteur (14).

6. Dispositif de mesure de force selon l'une des revendications précédentes, **caractérisé en ce qu'**au moins un élément détecteur (78 ; 80 ; 82 ; 84) est associé à chaque pôle magnétique (62a ; 68a ; 70a ; 72a), et notamment **en ce que** le dispositif détecteur (18 ; 18') comprend un troisième élément détecteur (82) et un quatrième élément détecteur (84).

7. Dispositif de mesure de force selon l'une des revendications précédentes, **caractérisé en ce que** les éléments détecteurs (78, 80, 82, 84, 86) du dispositif détecteur (18 ; 18') sont disposés symétriquement par rapport à un premier plan médian (88), et notamment **en ce que** les éléments détecteurs (78, 80, 82, 84, 86) du dispositif détecteur (18 ; 18') sont disposés symétriquement par rapport à un deuxième plan médian (90) perpendiculaire au premier plan médian (88), et notamment **en ce que** le premier plan médian (88) du dispositif détecteur (18) coïncide avec le premier plan médian (64) du dispositif émetteur (14) quand aucune déviation relative n'est présente entre le dispositif émetteur (14) et le dispositif détecteur (18).

8. Dispositif de mesure de force selon la revendication 7, **caractérisé en ce que** le premier plan médian du dispositif détecteur (18') est disposé avec un angle par rapport à un premier plan médian (64) du dispositif émetteur (14).

9. Dispositif de mesure de force selon la revendication 7 ou 8, **caractérisé en ce que** le deuxième plan médian (90) du dispositif détecteur (18) coïncide avec le deuxième plan médian (66) du dispositif émetteur (14) quand aucune déviation relative n'est présente entre le dispositif émetteur (14) et le dispositif détecteur (18).

10. Dispositif de mesure de force selon l'une des revendications 7 à 9, **caractérisé en ce que** le deuxième plan médian du dispositif détecteur (18') est disposé avec un angle par rapport à deuxième plan médian (66) du dispositif émetteur (14).

11. Dispositif de mesure de force selon l'une des revendications précédentes, **caractérisé en ce que** des éléments détecteurs (78, 80, 82, 84) du dispositif détecteur (18) sont disposés dans les angles d'un quadrilatère, et notamment **en ce que** le quadrilatère (87 ; 170) du dispositif détecteur (18, 18') est congruent à un quadrilatère (75) sur les angles duquel sont situés les pôles magnétiques, ou est situé avec un nagle par rapport au quadrilatère (75) des pôles magnétiques, et notamment **en ce qu'**un autre élément détecteur (86) est disposé au point d'intersection des diagonales du quadrilatère (75).

12. Dispositif de mesure de force selon l'une des revendications précédentes, **caractérisé en ce qu'**un élément détecteur (78 ; 80 ; 82 ; 84) associé à un ou à plusieurs pôles magnétiques est positionné dans un espace de projection du ou des pôles magnétiques devant le ou les pôles magnétiques dans la direction du dispositif détecteur (18).

13. Procédé d'analyse de signal pour un dispositif de mesure de force selon l'une des revendications précédentes, où un champ magnétique est mesuré dans une zone centrale (74) de l'agencement quadripolaire par un élément détecteur (86) associé à la zone centrale.
